# EUROPEAN PATENT APPLICATION

(11) **EP 4 567 547 A1**
(43) Date of publication of application: **11.06.2025**
(21) Application number: 24217435.7
(22) Date of filing: 04.12.2024
(51) Int. Cl.: G05G 1/08, G05G 5/06

(54) **SELECTOR KNOB FOR A MOTOR VEHICLE**

(30) Priority: 05.12.2023 IT 202300025980
(71) Applicant: FERRARI S.p.A., 41100 Modena (IT)
(72) Inventor: CONIGLIARO, Vito, 41100 MODENA (IT); MARCON, Davide, 41100 MODENA (IT); CARDITELLO, Tommaso, 41100 MODENA (IT)
(74) Representative: Studio Torta S.p.A.

(57) **Abstract**

A selector knob (4) for a motor vehicle (1) includes a support (5) adapted to be attached to a component of the motor vehicle, a lever (6) carried by the support (5) in a rotatable manner about a straight axis (A) among a plurality of distinct angular positions, transduction means (23, 24) configured to detect information about an actual angular position of the lever (6) among said distinct angular positions and to generate a control signal corresponding to the detected information to select a control setting of the motor vehicle (1) associated with the actual angular position, characterized in that the transduction means comprise a number of sensors (23) equal to the number of said distinct angular positions, the sensors (23) being angularly distributed about said axis (A) and facing the lever (6) according to respective radial directions (C) with respect to said axis (A), wherein each of the sensors (23) is configured to detect the presence of a device (24) fixed to the lever (6) when the lever (6) reaches a corresponding one of said distinct angular positions, thereby detecting the actual angular position of the lever (6).

## Description

### CROSS-REFERENCE TO RELATED APPLICATIONS

This patent application claims priority from Italian patent application no. 102023000025980 filed on December 5, 2023, the entire disclosure of which is incorporated herein by reference.

### TECHNICAL FIELD

The invention relates to a selector knob for a motor vehicle, in particular part of a steering wheel of the motor vehicle and, more in particular, serving as a selector for a setup or control settings of the motor vehicle.

### PRIOR ART

Some of the Applicant's vehicles feature at least one knob mounted on the steering wheel and serving as a selector for the setup or control settings.

More in detail, the control settings can relate, for example, to suspension configuration, stability control, traction control and the like.

In commercial terms, the knob also is better known as a "hand lever", as it recalls the appearance of some manual controls used on motor vehicles of the past.

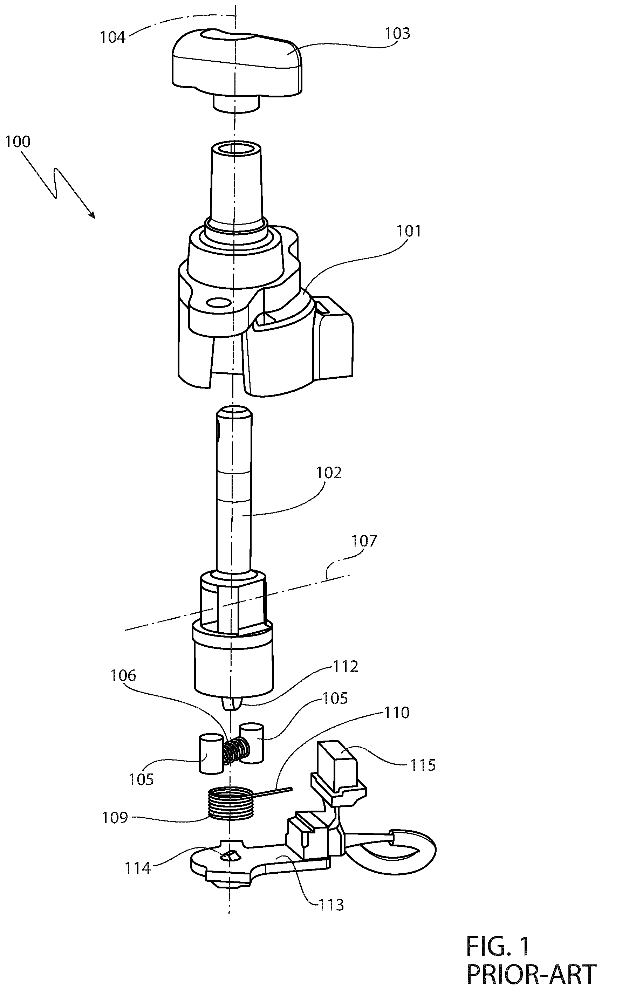

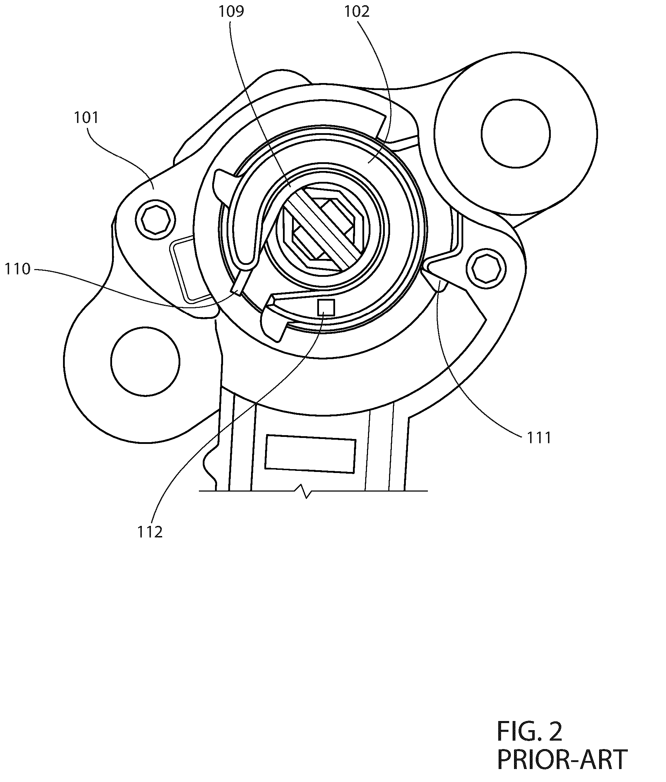

Figures 1, 2 show an example of a knob 100 already used in some cars available in the market.

The knob 100 comprises a plastic support 101, a rotor 102 and a lever 103 defining the portion of the knob 100 that can be operated by a driver.

The lever 103 is attached to the rotor 102, which axially extends along a straight direction 104 and is rotatable with respect to the support 101.

The support 101 also axially extends along the direction 104 and is internally hollow so as to accommodate the rotor 102.

The rotor 102 has two openings facing one another along a radial direction 107 with respect to the direction 104 and defining the ends of a through-hole going through the rotor 102.

A pair of cams 105 coupled to one another by a spring 106 extending along the radial direction 107 are arranged through the through-hole, whereby they can be brought closer to one another along the radial direction 107 against the action of the spring 106, which, on the other hand, acts to move the cams 105 away from one another along the radial direction 107.

The cams 105 are preferably made of a metal material.

The cams 105 radially project from the openings to steadily cooperate in contact with a radially inner surface (not shown) of the support 101.

The radially inner surface is formed by a circumferential sequence of grooves, wherein the cam 105 centrally lies, due to the pre-loading of the spring 106, in respective positions of stable balance of the knob 100.

The driver, who imparts a rotation to the lever 103 from one of the stable balance positions, causes a rotation of the rotor 102; the cams 105 follow the rotation of the rotor 102, as they are arranged through the radial hole of the rotor 102, cooperating in contact with the radially inner surface of the support 101.

The cooperation between the cams 105 and the support 101 leads to a compression of the spring 106 and consequently causes the cams 105 to move closer to one another along the radial direction 107, until each of the cams 105 leaves the corresponding groove to get into the circumferentially next groove.

Here, the spring 106 radially expands again, so that each of the cams 105 can settle in the circumferentially next groove, even if the driver stops following the rotation of the lever 103.

In this change of position of the knob 100, the driver receives a feeling of resistance given by the cooperation between the cams 105 and the support 101, as well as by the compression of the spring 106, when the knob 100 leaves its current stable balance position, and a feeling of release when the cams 105 get into the circumferentially next grooves, due to the reaction expansion of the spring 106.

Furthermore, the driver also perceives the sound generated by the cooperation between the cams 105 and the support 101.

The knob 100 further has an unstable position, as figure 2 will help understand. To achieve the unstable position, the knob 100 comprises a torsional spring 109 inserted in a seat axially obtained on an axial end of the rotor 102 opposite the other axial end coupled to the lever 103.

The axis of the spring 109 coincides with the direction 104; the spring 109 has at least one end attached to the rotor 102 and a free end 110, which radially protrudes from the rotor 102.

Correspondingly, the support 101 comprises a striker portion 111, with which the free end 110 of the spring 109 cooperates when the knob 100 reaches the unstable position.

The radial inner surface of the support 101 defines a groove corresponding to the unstable position and, per se, similar to the other grooves, so that the corresponding one of the cams 105 can get into the latter groove, but against the reaction of the spring 109, whose integral rotation together with the rotor 102 is hindered by the striker portion 111, so that the spring 109 undergoes a twisting moment that torsionally loads the spring 109.

The driver, who therefore brings the knob 100 to the unstable position, will receive an obstacle sensation given by the torsional reaction of the spring 109.

The stable balance positions and the unstable position of the knob 100 correspond to respective control settings for the vehicle. In particular, the unstable position corresponds to an extreme setup of the vehicle, in which substantially all the automatic controls are deactivated to enable a substantially manual driving of the vehicle. For this reason, the obstacle sensation guaranteed by the spring 109 is convenient to warn the driver about reaching the unstable position.

The knob 100 comprises a permanent magnet 112 attached to the axial end of the rotor 102 opposite the one coupled to the lever 103 in an eccentric position with respect to the direction 104.

The magnet 112 faces a printed circuit board 113, to which a magnetic field sensor 114 is coupled in the direction 104, i.e. at the centre of the rotor 102.

In this way, the magnetic field sensor 114 detects the direction of the magnetic field emitted by the magnet 112 and provides the relative information to a control unit 115 of the knob 100.

The control unit 115 determines, from the information, the position of the rotor 102 and, hence, of the knob 100, since the position of the rotor 102 will be directly correlated with the direction of the magnetic field emitted by the magnet 112.

By so doing, the control unit 115 imposes the control settings corresponding to the current position of the knob 100 among the stable balance positions and the unstable position.

Although the knob 100 is generally satisfactory per se, a need for improvement is nevertheless felt.

More in particular, the axial dimension of the knob 100 needs to be reduced, while not sacrificing the above-explained functionalities of the knob 100, including the presence of the unstable position.

Furthermore, there is also a need to improve the sensations received by the driver or user.

An object of the invention is to fulfil at least one of the needs discussed above, preferably in a simple and reliable fashion.

### DESCRIPTION OF THE INVENTION

The object is reached by a selector knob for a motor vehicle as defined in claim 1.

The dependent claims define special embodiments of the invention.

### BRIEF DESCRIPTION OF THE DRAWINGS

Hereinafter, an embodiment of the invention will be described, in order to allow the latter to be better understood, by way of non-limiting example and with reference to the accompanying drawings, wherein:
- figure 1 is an exploded view of a selector knob according to the prior art,
- figure 2 is a view from the bottom of the selector knob of figure 1, with parts removed for greater clarity,
- figure 3 is a front view of a steering wheel comprising a selector knob according to the invention,

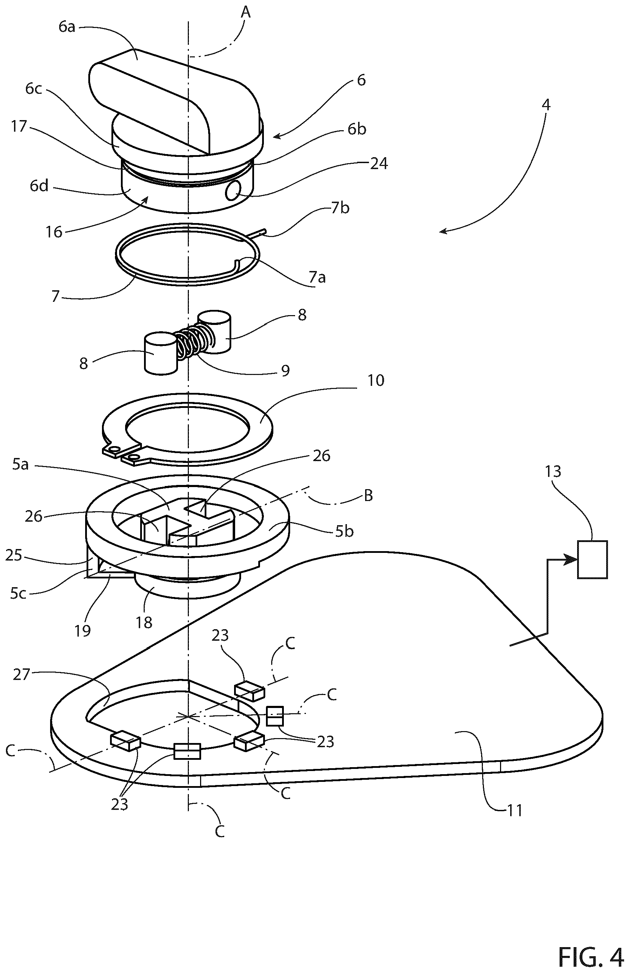

- figure 4 is an exploded view of the selector knob of figure 3,

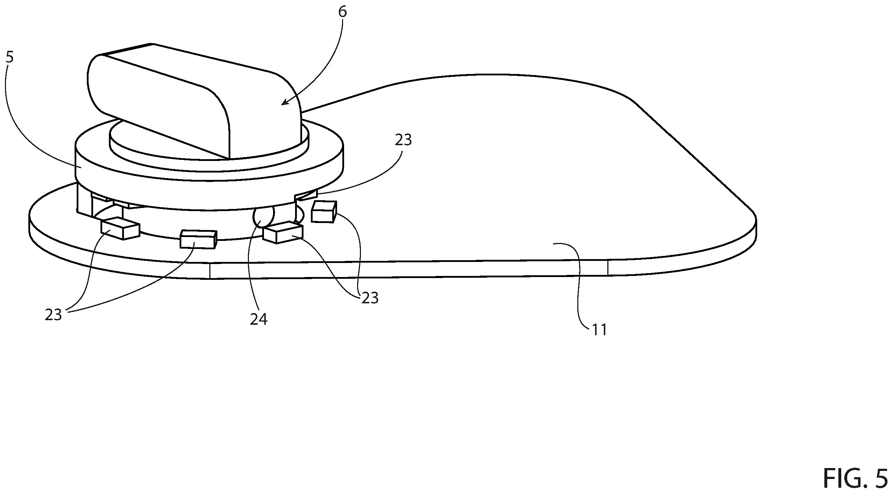

- figure 5 is a perspective view of the selector knob of figure 3 in an assembled state,
- figure 6 is a perspective view of the selector knob of figure 5 according to a different perspective point of view and with parts removed for greater clarity,
- figure 7 is similar to figure 6 and shows the selector knob in a different configuration from the one of figure 6,
- figure 8 is a perspective view of a lower area of a lever of the selector knob of figure 5,
- figure 9 is a perspective view of a support for the lever of figure 8, and

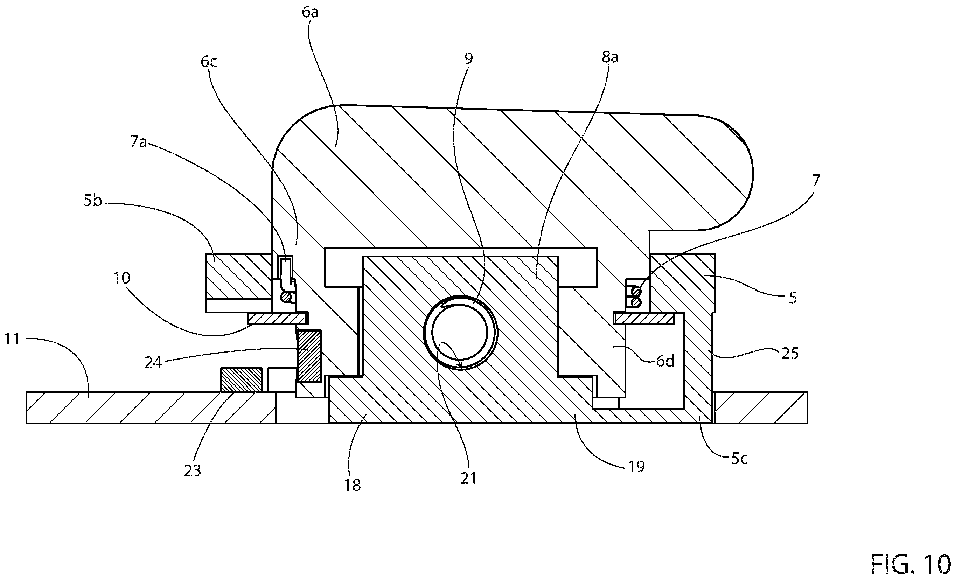

- figure 10 is a cross section of the assembled knob of figure 5 according to a radial plane with respect to a rotation axis of the lever.

### EMBODIMENTS OF THE INVENTION

In figure 1, reference number 1 is used to indicate, as a whole, a motor vehicle.

The motor vehicle 1 is provided with a steering wheel 3, in particular within a passenger compartment of the motor vehicle 1.

The motor vehicle 1 has a seat for a driver inside the passenger compartment.

The driver's seat is located in front of the steering wheel 3, according to the travel direction or roll axis or longitudinal axis of the motor vehicle 1.

The steering wheel 3 is part of a steering wheel assembly further comprising a steering column of the known type and not shown, with respect to which the steering wheel 3 rotates.

Indeed, the steering wheel 3 has a rotation axis A, which has at least one component along the longitudinal axis or is parallel thereto. Therefore, the steering wheel 3 can rotate about the rotation axis A, in particular with respect to the steering column.

The rotation axis A is perpendicular to a relative rotation plane of the steering wheel 3.

The steering wheel 3 comprises a selector knob 4 to select a control setting of the motor vehicle 1.

Specifically, the selector knob 4 is used to set or select a dynamic configuration or a setup of the motor vehicle 1 among various pre-established options available (for example, a configuration designed for wet roads, a sports configuration and the like).

Furthermore, preferably, each of the pre-established options could also correspond to a specific configuration or adjustment of the suspensions of the motor vehicle 1.

Therefore, the control setting coincides with the dynamic configuration or setup of the motor vehicle 1 among the pre-established options available.

More precisely, the control setting relates to at least one or more of a suspension setup, a stability control and a traction control of the motor vehicle 1.

The knob 4 comprises a support 5 attached to the steering wheel 3 and a lever or graspable portion 6 carried by the support in a rotary manner so that it can rotate about a straight axis, specifically coinciding with the axis A, among a plurality of specific distinct angular positions.

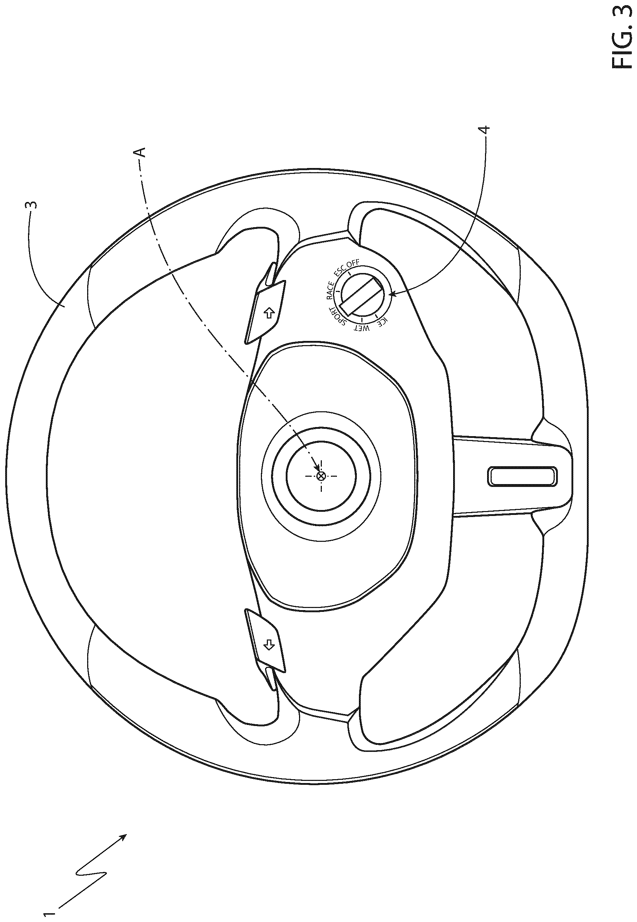

With reference to figure 3, the distinct angular positions are respectively marked by the reference symbols ICE (corresponding to a configuration designed for icy roads), WET (corresponding to a configuration designed for wet roads), SPORT (corresponding to a sports configuration), RACE (corresponding to a racing configuration), ESC OFF (corresponding to an extreme configuration, in which the controls of the motor vehicle 1 are deactivated). As explained more in detail below, the ESC OFF position preferably is an unstable position of the knob 4.

In particular, the knob 4 also comprises the following components, independently of one another: a torsional spring 7, two cam elements 8, an elastic element 9, which couples the cam elements 8 to one another, a stop ring 10 and a printed circuit board 11.

In addition, the knob 4 comprises a transduction assembly, potentially comprising, in turn, the printed circuit board 11, configured to detect information about an actual angular position of the lever 6 among the specific distinct angular positions.

The transduction assembly is also configured to generate or emit a control signal corresponding to the detected information.

The motor vehicle 1 comprises a control unit 13 coupled to the transduction assembly so as to receive the control signal. By means of the control signal, the control unit 13 is configured to impose or control the control setting of the motor vehicle 1 corresponding to the actual angular position of the lever 6.

Indeed, the control signal carries the information about the actual angular position of the lever 6, which is extracted by the control unit 13, so that the latter imposes the relevant control setting based on the extracted information.

The lever 6 comprises a pointer or handle element 6a extending in a radial manner with respect to the axis A and a portion 6b, in particular axially symmetrical or defining a solid of revolution about the axis A, from which the handle 6a axially protrudes.

The portion 6b has an axial end 6c, from which the element 6a protrudes, and an axial end 6d opposite to the axial end 6c along the axis A.

The end 6d preferably is substantially cylindrical about the axis A.

The end 6d axially defines a cavity 14, so that the lever 6 or, more in particular, the end 6d has a radially inner surface 15, specifically radially defining the cavity 14.

The lever 6 or, more precisely, the end 6d also has a radially outer surface 16.

Basically, the lever 6 or, more precisely, the end 6d is shaped like a cup internally defining the cavity 14. The handle 6a represents the cup handle.

In particular, the radially outer surface 16 has a groove 17 extending like a ring or in a helical manner about the axis A and defining a seat for the torsional spring 7.

The torsional spring 7 is at least partially accommodated in this seat.

The torsional spring 7 is wound around the axis A on the radially outer surface 16, in particular at least partially inside the dedicated seat.

The torsional spring 7 extends in a helical manner about the axis A.

The torsional spring 7 has an end 7a attached to the lever 6 and a free end 7b, which preferably protrudes with respect to the radially outer surface 16 towards the outside of the lever. However, this is not essential, since the free end 7b could have passed through a hole in the lever 6, thus getting into the cavity 14, namely protruding with respect to the radially inner surface 15 towards the inside of the lever 6.

The free end 7b preferably extends on a plane orthogonal to the axis A. The free end 7b can extend radially with respect to the axis A or also according to distinct directions belonging to the plane orthogonal to the axis A.

The support 5 comprises a radially innermost or central portion 5a, which axially extends along the axis A and is arranged inside the cavity 14, namely inside the lever 6, in particular centrally. Therefore, the portion 5a is an inner portion with respect to the lever 6.

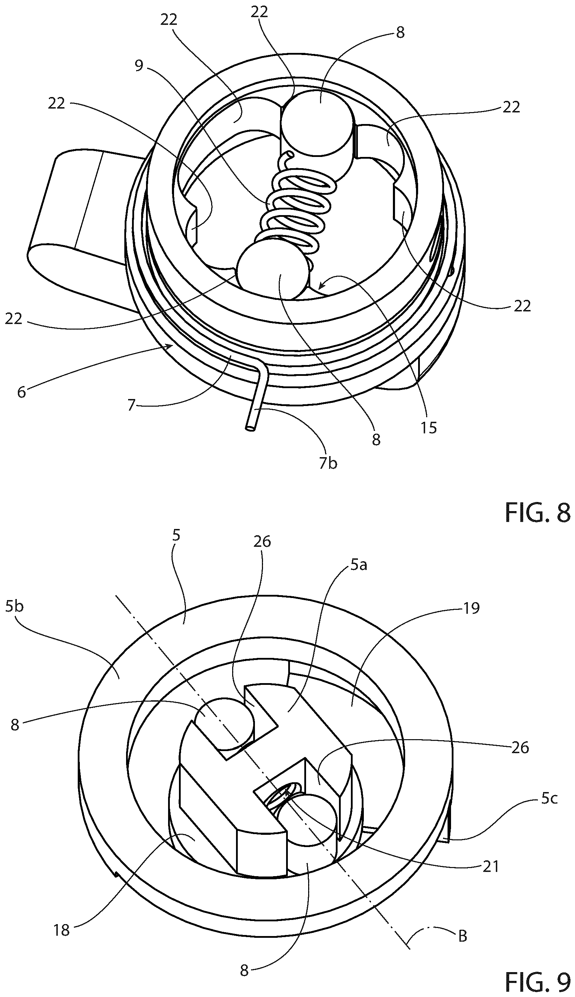

The portion 5a has a through-hole 21 (figure 9) along a radial direction or radial axis B with respect to the axis A. The through-hole 21 has two opposite ends according to the direction B defined by respective seats 26 for the cam elements 8. The cam elements 8 have respective portions that engage the seats 26, so that the cam elements 8 partially protrude from the seats 26 along the direction B towards the radially inner surface 15.

The elastic element 9 extends along or through the hole 21 between the cam elements 8 according to the axis B. In particular, the elastic element 9 comprises a helical spring with opposite ends attached to the cam elements 8, respectively; the spring of the elastic element 9 extends in a helical manner around the direction B between the cam elements 8.

Basically, the cam elements 8 are coupled to the support 5 or, more precisely, to the portion 5a in a movable manner along the direction B, in particular in an oscillating manner along the direction B by means of the elastic element 9. Indeed, the cam elements 8 are partially housed in the relative seats 26 defined by walls of the support 5 or, more precisely, of the portion 5a, with which the cam elements 8 are in sliding contact along the direction B, so that the seats 26 avoid movements of the cam elements 8 aside from movements along the direction B, which, among other things, is fixed with respect to the support 5 independently of all other aspects.

Here, the sliding contact between the cam elements 8 and the walls defining the relative seats 26 defines the coupling between the cam elements 8 and the support 5 or the portion 5a. Alternatively, the coupling between the cam elements 8 and the walls defining the relative seats 26 could have a clearance, namely without implying an actual contact between the cam elements 8 and the walls of the seats 26, so that the latter still have the function of substantially limiting the admissible movements of the cam elements 8 to the movements along the direction B.

Therefore, the cam elements 8 can be brought closer to one another along the direction B against an elastic reaction of the elastic element 9 along the direction B.

In addition, the support 5 comprises a radially outermost or peripheral portion 5b, which extends like a ring around the axis A, in particular forming a collar around the lever 6, which is therefore embraced by the collar.

The lever 6 or, more precisely, the end 6d is arranged radially (with respect to the axis A) between the portions 5a, 5b of the support.

Basically, the lever 6 is axially inserted through the portion 5b with the cavity 14 facing the portion 5a, so that the latter portion is covered or housed by the lever 6 in the cavity 14.

The portions 5a, 5b are connected to one another by means of a connecting portion or rib 5c of the support 5. Preferably, the support 5 is manufactured as one single piece, whereby the portions 5a, 5b, 5c form one single body, without interruptions.

More in detail, the portion 5c has an element 18, which axially extends from the portion 5a coming out of the cavity 14, namely so as to be arranged on the outside of the lever 6.

Furthermore, the portion 5c has an element 19, which extends from the element 18 in a radial manner with respect to the axis A. The element 19 has an angular extension around the axis A according to an acute angle, so that the majority of the space around the axis A surrounding the element 19 is substantially free.

Furthermore, the portion 5c has an element 25, which axially extends from a radial outermost end of the element 19 until it ends on the portion 5b, thus creating the connection between the portions 5a, 5b.

Preferably, the element 25 has a portion that is axially (i.e. according to the axis A) located at the free end 7b of the torsional spring 7, namely at the plane on which the free end 7b lies.

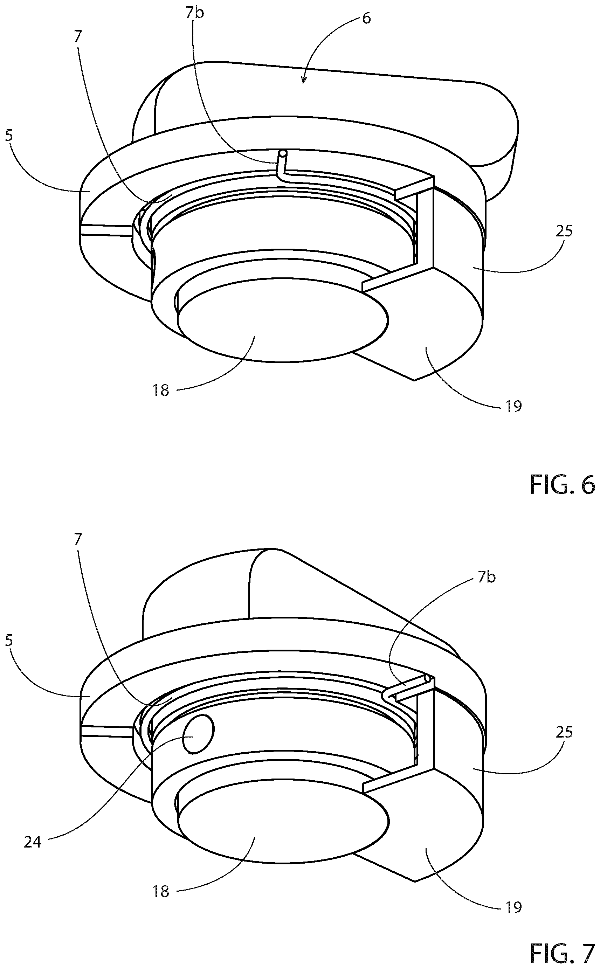

In this way, the support 5 or, more precisely, the portion 5c or, even more precisely, the element 25 define a striker portion arranged so as to cooperate with the free end 7b in one of the angular positions of the lever 6 (figure 7). As explained more in detail below, this angular position of the lever 6 defines, in particular, the unstable position ESC OFF of the lever 6.

By rotating the lever 6 around the axis A, for example in a clockwise direction, from an angular position other than the unstable position ESC OFF (for example, the one of figure 6), the free end 7b meets the striker portion (figure 7) starting to cooperate with it according to a circumferential direction around the axis A. The cooperation between the free end 7b and the striker portion does not forbid a further rotation or a rotation advancement, in this example in a clockwise direction, of the lever 6, but the further rotation causes the torsional spring 7 to be twisted. By so doing, the torsional spring 7 reacts with an elastic reaction torque contrary to the further rotation of the lever 6.

Therefore, the elastic reaction torque is oriented so that the lever 6 leaves the unstable position ESC OFF.

The unstable position ESC OFF (figure 3) is an extreme position among the angular positions of the lever 6, i.e. it is located at one of the two ends of the path that can be covered by the lever 6 or by the handle 6a around the axis A.

The stop ring 10, which is more specifically defined by a Seeger ring, is arranged so as to radially cooperate with the radially outer surface 16 and axially cooperate with the portion 5b of the support 5 so as to prevent lever 6 from accidentally slipping out of the support 5 along the axis A.

The printed circuit board 11 is, more generally, a support or attachment body that extends crosswise to the axis A.

In particular, the attachment body or printed circuit board 11 is plate-shaped and extends on a plane that is transversal or, more specifically, orthogonal to the axis A.

The attachment body or printed circuit board 11 has an axial bore 27 around the axis A, in particular a through bore 27.

The lever 6 and also, specifically, the support 5 are axially inserted in the bore 27, namely they engage the bore 27 in an axial manner.

Preferably, one of the cam elements 8 stably cooperates in contact with the radially inner surface 15 of the lever 6.

More in detail, as shown in figure 9, the cam element 8 partially protrudes from the relative seat 26 on the support 5 along the direction B to cooperate with the radially inner surface 15. As already mentioned above, the seat 26 of the cam element 8 extends along the direction B, in particular towards the axis A.

Specifically, both cam elements 8 stably cooperate in contact with the radially inner surface 15 of the lever 6. This is not strictly necessary, although advantageous, first of all because even a single cam element 8 could be sufficient to stably cooperate with the radially inner surface 15. For example, the single cam element 8 could be coupled to the support 5 or, more precisely, to the portion 5a by means of an elastic element not shown herein with ends fixed to the support 5 and to the single cam element 8, respectively, so that the cam element 8 can still be arranged in an oscillating or movable manner along the direction B, this time with respect to the sole support 5 instead of with respect to the other cam element 8.

The radially inner surface 15 extends around the axis A and defines a plurality of grooves 22, wherein each of the grooves 22 accommodates one of the cam elements 8 when the lever 6 reaches or is in a corresponding position among the specific distinct angular positions of the lever 6.

Specifically, for each specific angular position of the lever, the other one of the cam elements 8 also is accommodated by another one of the grooves 22 or by a further groove of the radially inner surface 15.

The grooves 22 are concave with a concavity facing the axis A. Furthermore, on a plane orthogonal to the axis A, the grooves 22 have respective profiles, each shaped like an arc of a circle or an ellipse. The profiles might not all be the same. For example, the profile of the groove 22 that accommodates the cam element 8 in the unstable position ESC OFF of the lever 6 could be longer than the others and elliptical.

Specifically, still on the plane orthogonal to the axis A, the profiles of two grooves 22 adjacent to one another form a cusp or an angular point, i.e. a discontinuity. Alternatively, the cusp could be replaced by a joint to soften the discontinuity between two adjacent grooves 22.

In particular, since the cam elements 8 are coupled to one another by means of the elastic element 9 arranged through the hole 20, the elastic element 9 is configured to space the cam elements 8 apart from one another and to bring the cam elements 8 in contact with the radially inner surface 15 at points that are diametrically opposite relative to the axis A.

For example, the elastic element 9 can be pre-loaded so as to ensure the stable contact of the cam elements 8 with the radially inner surface 15, while allowing the cam elements 8 to move closer to one another along the direction B against its elastic reaction.

Preferably, the transduction assembly of the knob 4 comprises a number of sensors 23 equal to the number of the specific distinct angular positions of the lever 9.

The sensors 23 are angularly distributed about the axis A and face the lever 6 according to respective radial directions C with respect to the axis A.

In particular, the sensors 23 are arranged on the outside of the lever 6, so that they face the radially outer surface 16.

Each of the sensors 23 is configured to detect the presence of a device 24 attached to the lever 6 when the lever 6 reaches a corresponding position among the specific distinct angular positions, thereby detecting the actual angular position of the lever 6.

Each of the sensors 23 faces the lever 6 according to a corresponding radial direction C, meaning that it is configured to detect the presence of the device 24 along the radial direction C, namely when the radial direction C is directed on the device 24. In other words, each sensor 23 has the capacity to detect the presence of the device 24 in the relative radial direction C.

For example, the sensors 23 can be magnetic sensors, i.e. sensors that are each configured to detect a magnetic field emitted by the device 24 along the relative radial direction C. In this case, the device comprises, in particular, a permanent magnet. By detecting the magnetic field emitted by the permanent magnet when the lever reaches the corresponding position, each sensor 23 detects the presence of the device 24 and, hence, the actual angular position of the lever. More specifically, the sensors 23 are Hall effect sensors.

Alternative examples of sensors 23 and of the device 24 can be multiple; for example, the sensors 23 could be optical sensors when the device 24 comprises an emitter of light rays that are radial with respect to the axis A or, more generally, electromagnetic radiation detectors when the device 24 comprises an emitter of electromagnetic radiation that is radial with respect to the axis A.

Specifically, in each of the specific distinct angular positions of the lever 6, the device 24 is aligned with a corresponding one of the sensors 23 along one of the radial directions C.

Preferably, the device 24 is housed on a seat obtained on the radially outer surface 16, such that the device 24 is radially exposed to the outside of the lever 6.

In the embodiment shown herein, the seat for the torsional spring 10 is axially arranged between the handle 6a or the portion 6c and the seat for the device 24.

Furthermore, the sensors 23 are attached to the printed circuit board 11, in particular directly.

Preferably, the parts of the cam elements 8 and of the lever 6 stably cooperating in contact with one another are metallic.

In the operation of the knob 4, the driver can move the lever 6 from one of its specific distinct angular positions to another one of these. Here, the cam elements 8 leave the relative grooves 22 that accommodate them. In order to leave the grooves 22, the cam elements 8 move closer to one another along the direction B thanks to the stable cooperation between the cam elements 8 and the radially inner surface 15 against the elastic reaction of the elastic element 9, which compresses along the direction B.

At this stage, the driver perceives a resistance corresponding to the compression of the elastic element 9.

When the cam elements get into the grooves 22 corresponding to the new angular position of the lever 6, the elastic reaction of the elastic element 9 favours the settlement of the cam elements 8 in the grooves 22. Here, the driver perceives a sensation of release and ease of reaching the new angular position of the lever 6.

In the meantime, the metal parts in contact generate a sound associated with the mutual movement.

Owing to the above, the advantages of the knob 4 according to the invention are evident.

In particular, the fact that the grooves 22 are obtained on the lever 16 and that the cam elements 8 are carried by the portion 5a in the cavity 14 allows the knob 4 to be significantly more compact in axial terms.

Similarly, the radial arrangement of the sensors 23 around the axis A also has the same effect of improving the axial compactness of the knob 4.

Furthermore, the fact that the cam elements 8 have metal parts stably cooperating in contact with a metal surface guarantees improved sensations for the driver compared to a solution with metal parts in contact with a plastic element.

In addition, compared to the prior art, the number of necessary components decreases together with the complexity of the entire knob 4, although all the functions of known solutions are maintained by the knob 4.

Finally, the knob 4 according to the invention can clearly be subject to changes and variants, which, though, do not go beyond the scope of protection defined by the appended claims.

In particular, the number of the various components described and shown herein is a mere example, but the number of them could change.

Similarly, the shape of the components described and shown herein could be different.

Furthermore, the description includes two independent and combinable aspects, which both have the effect of enabling a reduction in the axial dimension of the knob 4.

In particular, according to the first aspect, the knob 4 comprises at least one cam element 8 coupled to the support 5 in a movable manner along the radial direction B with respect to the axis A and fixed with respect to the support 5, the cam element 8 further being stably cooperating in contact with the radially inner surface 15 of the lever 6 extending about the axis A and defining the plurality of grooves 22, each of which accommodates the cam element 8 when the lever 6 reaches a corresponding one of said distinct angular positions.

According to the second aspect, alternatively or in addition to the first aspect, the transduction assembly or means comprise a number of sensors 23 equal to the number of distinct angular positions, the sensors 23 being angularly distributed about the axis A and facing the lever 6 according to respective radial directions C with respect to the axis A, wherein each of the sensors 23 is configured to detect the presence of the device 24 fixed to the lever 6 when the lever 6 reaches a corresponding one of said distinct angular positions, thereby detecting the actual angular position of the lever 6.

## Claims

1. Selector knob (4) for a motor vehicle (1), the knob comprising
- a support (5) adapted to be attached to a component of the motor vehicle,
- a lever (6) carried by the support (5) in a rotatable manner about a straight axis (A) among a plurality of distinct angular positions,
- transduction means (23, 24) configured to detect information about an actual angular position of the lever (6) between said distinct angular positions and to generate a control signal corresponding to the detected information to select a control setting of the motor vehicle (1) associated with the actual angular position,
**characterized in that**
- the transduction means comprise a number of sensors (23) equal to the number of said distinct angular positions, the sensors (23) being arranged angularly distributed about said axis (A) and facing the lever (6) according to respective radial directions (C) with respect to said axis (A), wherein each of the sensors (23) is configured to detect the presence of a device (24) fixed to the lever (6) when the lever (6) reaches a corresponding one of said distinct angular positions, thereby detecting the actual angular position of the lever (6).

2. The selector knob according to claim 1, further comprising at least one cam member (8) coupled to the support (5) in a movable manner along a radial direction (B) with respect to said axis (A) and fixed with respect to the support (5), the cam member (8) further being stably cooperating in contact with a radially inner surface (15) of the lever (6) extending about said axis (A) and defining a plurality of grooves (22), each of which accommodates the cam element (8) when the lever (6) reaches a corresponding one of said distinct angular positions.

3. The selector knob according to claim 2, wherein the support (5) comprises an inner portion (5a) relative to the lever, the inner portion (5a) extending axially along said axis (A) and having a seat (26) extending along said radial direction (B) and engaged by a portion of the cam member (8) so that the cam member (8) partially protrudes from the seat (26) along said radial direction (B) to cooperate with the radially inner surface (15).

4. The selector knob according to claim 3, wherein the seat (26) defines one end of a through-hole (21) of the inner portion (5a) along said radial direction (B), the through-hole (21) comprising a further seat (26) defining the other opposite end of the through-hole (21) and engaged by a portion of a further cam member (8) stably cooperating with the radially inner surface (15), the cam members (8) being coupled together by an elastic means (9) arranged through the through-hole (21) and configured to distance the cam members (8) from each other, thereby bringing the cam members (8) into contact with the radially inner surface (15) at diametrically opposite points with respect to said axis (A) and permitting a reciprocal approach of the cam members (8) along said radial direction (B) against an elastic reaction thereof.

5. The selector knob according to any one of claims 2 to 4, further comprising a torsional spring (7) extending about said axis (A) and having an end (7a) attached to the lever (6) and a free end (7b), the support (5) comprising a striker portion (5c) arranged to cooperate with the free end (7b) at an unstable position between said distinct angular positions, such that the torsion spring (7) exerts an elastic reaction torque on the lever (6) directed so that the lever (6) leaves the unstable position.

6. The selector knob according to any of claims 2 to 5, wherein the respective stably contacting parts of the cam member (8) and the lever (6) are metallic.

7. The selector knob according to any of the preceding claims, wherein the device (24) fixed to the lever (6) comprises a permanent magnet, and wherein the sensors (23) comprise respective magnetic field sensors each configured to detect a magnetic field emitted by the permanent magnet when the lever (6) reaches the corresponding one of said distinct angular positions, thereby detecting the presence of the device (24) and thus the actual angular position of the lever (6).

8. The selector knob according to any of the preceding claims, wherein the device (24) fixed to the lever at each of said distinct angular positions of the lever (6) is aligned with a corresponding one of the sensors (23) along one of said radial directions (C).

9. The selector knob according to any one of the preceding claims, wherein the device (24) fixed to the lever (6) is housed in a device seat formed on a radially outer surface (16) of the lever (6), such that the device (24) is radially exposed to the outside of the lever (6).

10. The selector knob according to any one of the preceding claims, wherein the sensors (23) are attached to an attachment body, in particular defined by a printed circuit board (11), extending transversely to said axis (A) and having an axial bore (27) around said axis (A), the axial bore (27) being axially engaged by the lever (6).

11. Steering wheel assembly for a motor vehicle, the assembly comprising a steering column and a steering wheel (3) rotatable with respect to the steering column about a steering wheel axis (A) and comprising a selector knob (4) according to any one of the preceding claims.

12. Motor vehicle comprising the steering wheel assembly according to claim 11 and a control unit (13) configured to receive the control signal and control the control setting according to the received control signal.

13. Motor vehicle (1) according to claim 12, wherein the control setting relates to at least one of a motor vehicle suspension setup (1), a motor vehicle stability control (1), and a motor vehicle traction control (1).
